**Europäisches Patentamt**

**European Patent Office**

**Office européen des brevets**

(11) Veröffentlichungsnummer : **0 270 486 B1**

## (12) EUROPÄISCHE PATENTSCHRIFT

(45) Veröffentlichungstag der Patentschrift :
06.03.91 Patentblatt 91/10

(21) Anmeldenummer : 87810610.3

(22) Anmeldetag : 23.10.87

(51) Int. Cl.⁵ : **G03B 27/58**

(54) **Tageslichtkassette.**

(30) Priorität : 29.10.86 CH 4277/86

(43) Veröffentlichungstag der Anmeldung :
08.06.88 Patentblatt 88/23

(45) Bekanntmachung des Hinweises auf die
Patenterteilung :
06.03.91 Patentblatt 91/10

(84) Benannte Vertragsstaaten :
BE CH DE FR GB IT LI NL

(56) Entgegenhaltungen :
EP-A- 0 016 488
EP-A- 0 053 856
US-A- 3 613 880
US-A- 4 272 035
RESEARCH DISCLOSURE, Band 2244, Nr. 163,
November 1977, Seiten 43-44, Abschnitt 16352,
Havant, GB; R.P. LEHMANN et al.: "Core
locking device for web dispensing cassette"

(73) Patentinhaber : ILFORD AG
Industriestrasse 15
CH-1701 Fribourg (CH)

(72) Erfinder : Güggi, Markus
Chemin Forêt 9
CH-1723 Marly (CH)
Erfinder : Gervais, Fernand
Oberdorf
CH-1711 Giffers (CH)

(74) Vertreter : Matthews, Richard Nordan
Ilford Limited Patents Department Town Lane
Mobberley Knutsford Cheshire WA16 7HA
(GB)

## Beschreibung

Die Erfindung betrifft eine Tageslichtkassette für photographisches Material, das als Rolle auf einen Spulenkern aufgewickelt ist, der zwischen zwei an einander gegenüberliegenden Kassettenseitenwänden ausgebildeten Nabenteilen in einem Gehäuse drehbar gelagert ist, in dessen Mantel ein gegen Licht abgedichteter Schlitz für die Entnahme des photographischen Materials nach dem Brechen der Sollbruchstelle einer Drehsperre zwischen dem Spulenkern und dem Nabenteil vorgesehen ist.

Eine derartige Tageslichtkassette ist aus der EP-A-O 053 856 bekannt und verfügt über an den Kassettenseitenwänden ausgebildete Nabenteile, die in die beiden Enden des Spulenkerns hineinragen und mit dessen Innenseite in Berührung stehen. Im Innern des Spulenkerns ist ein flaches Verschlußstück eingeklemmt, das sich entlang der Mittellängsebene erstreckt und über eine als Sollbruchstelle wirksam werdende Einschnürung mit einem flachen Kopfteil verbunden ist, das beim Zusammenbau der bekannten Tageslichtkassette in einen Schlitz eingesteckt wird, der sich in einem Wandabschnitt des Nabenteils befindet. Wenn nach dem Transport und der Handhabung der Tageslichtkassette das photographische Material entnommen werden soll, muß dieses mit einer anfänglichen Kraft von etwa 30 Newton herausgezogen werden. Dabei wird das photographische Material einer erheblichen Belastung ausgesetzt und leicht beschädigt. Beim Zusammensetzen der bekannten Tageslichtkassette ist entsprechend der Lage des Schlitzes eine genaue Orientierung des Spulenkerns mit dem eingesetzten flachen Verschlußstück erforderlich, damit dessen Kopfteil beim Beginn des Zusammenschiebens der Teile genau gegenüber dem Schlitz liegt.

Aus Research Disclosure, Band 4244, Nr. 163, Nov. 1977, Seiten 43 bis 44, Nr. 16352 ist eine Drehsperre mit einem radial verschiebbaren Sperriegel bekannt, der in der vorgeschobenen Stellung in eine Nut des Spulenkerns eingreift und diesen gegen Verdrehen sichert. Zum Lösen der Drehsperre muß der Sperriegel des viele Einzelteile aufweisenden Schloßmechanismus radial nach außen verschoben werden. Hierdurch wird zwar eine Belastung des photographischen Materials beim Lösen der Drehsperre vermieden, jedoch verfügt die Drehsperre über zahlreiche kompliziert herzustellende und einzubauende Einzelteile.

In der US-A-3 613 880 ist ein Spulenkern für Papierhandtücher beschrieben, der auf einer Seite mit einem Flanschteil versehen ist, das über in axialer Richtung spitz zulaufende Zähne verfügt, die beim Transport zum Verkrallen in den Transportkarton dienen und beim Einsetzen der Papierrolle in einen Papierspender mit einer Zahnradscheibe der Papiertransportvorrichtung in Eingriff kommen.

Kassettenseitenwandteile geringer Wandstärke mit verschiedenen Erhebungen und Vertiefungen zur Führung des Mantels einer Tageslichtkassette beim Zusammenbau sind in der EP-A-0 016 488 beschrieben. Aus der US-A-4 272 035 ist es bekannt, im Schlitzbereich einer Tageslichtkassette eine Profilschiene mit einer weichen Auflage zu verwenden.

Der Erfindung liegt die Aufgabe zugrunde, eine Tageslichtkassette der eingangs genannten Art zu schaffen, deren Drehsperre einfach hergestellt sowie zusammengebaut werden kann und die ohne Belastung des photographischen Materials entriegelt werden kann.

Diese Aufgabe wird erfindungsgemäß dadurch gelöst, daß die Drehsperre aus einem das Nabenteil mit dem Spulenkern verbindenden Zapfenteil und einem zugeordneten Buchsenteil besteht, die in Richtung ihrer Längsachsen gegeneinander leicht verschieblich und in Drehrichtung um ihre Längsachsen drehfest miteinander verbunden sind, wobei das Zapfenteil der Drehsperre über die Sollbruchstelle lösbar und das Buchsenteil der Drehsperre dauerhaft mit den benachbarten Teilen verbunden ist.

Bei einem bevorzugten Ausführungsbeispiel ist das Buchsenteil an einem mit dem Spulenkern drehfest verbundenen Lagerflansch und das Zapfenteil an dem Nabenteil einer Kassettenseitenwand angeformt. Um eine drehfeste Verbindung zu erhalten, ist das Buchsenteil mit einer Innenverzahnung und das Zapfenteil mit einer Außenverzahnung versehen. Die beiden Lagerflansche sind mit einem Rohrabschnitt in die Enden des als Hohlzylinder ausgebildeten Spulenkerns eingedrückt, wobei das Buchsenteil einen gegenüber dem Spulenkern kleineren Durchmesser aufweist und auf der von dem Spulenkern wegweisenden Seite des Flanschteils konzentrisch angeformt ist. Die Kassettenseitenwände weisen jeweils eine vom Spulenkern wegweisende Vertiefung auf, die sich in einem trichterförmigen Abschnitt bis auf einen Durchmesser verkleinert, der geringfügig größer als der Buchsenaußendurchmesser ist. Anschließend geht die Vertiefung in einen angeformten hohlzylindrischen Abschnitt über, der durch einen ringförmigen Boden begrenzt ist. An dem Boden ist ein in Richtung auf den trichterförmigen Abschnitt der Vertiefung hervorragender Rohrabschnitt angeformt, an dem das Zapfenteil über eine Vielzahl von leicht zerstörbaren Sollbruchverbindungsstegen angeformt ist. Wenn das Zapfenteil ohne Außenverzahnung geformt wird, kann die so ausgebildete Kassettenseitenwand bei gleichbleibenden sonstigen Bauteilen ohne Drehsperre lediglich als Lager für einen Lagerflansch verwendet werden. Die mit der Drehsperre versehene Kassettenseitenwand unterscheidet sich somit von der Kassettenseitenwand ohne Drehsperre lediglich dadurch, daß statt eines Zapfenteiles mit einem glatten zylindrischen Mantel ein Zapfenteil mit einer Außenverzahnung verwendet wird.

Zum Lösen der Drehsperre, deren Teile beim Spritzen der Lagerflansche und Kassettenseitenwände ohne zusätzliche lose Einzelteile hergestellt werden, ist es lediglich erforderlich, das mit einer Außenverzahnung versehene Zapfenteil in das Innere der Tageslichtkassette hineinzudrücken. Ein versehentliches Eindrücken des Zapfenteils ohne Außenverzahnung führt lediglich dazu, daß die Drehsperre durch Eindrücken des Zapfenteils an der gegenüberliegenden Seite gelöst werden muß.

Selbstverständlich ist es möglich, die Drehsperre auch an beiden Seiten der Tageslichtkassette vorzusehen, obwohl eine einzige Drehsperre normalerweise ausreichend ist.

Nachfolgend wird ein Ausführungsbeipsiel der Erfindung anhand der Zeichnung näher erläutert. Es zeigen :

Fig. 1 eine Tageslichtkassette gemäß der Erfindung in pespektivischer Ansicht,

Fig. 2 die Tageslichtkassette gemäß Fig. 1 im Längsschnitt,

Fig. 3 eine Draufsicht auf eine Tageslichtkassette gemäß Fig. 2 im Schnitt entlang der Linie III-III,

Fig. 4 einen Ausschnitt aus einem Längsschnitt durch eine Tageslichtkassette entsprechend Fig. 2 mit einer abgewandelten Ausbildung des Nabenteils ohne Drehsperre und des Lagerflanschs mit speziellen Führungsrippen,

Fig. 5 einen Querschnitt entlang der Linie V-V in Fig. 6 durch die Drehsperre der in der in Fig. 2 rechten Kassettenseitenwand und

Fig. 6 einen Längsschnitt durch die in Fig. 2 in der rechten Kassettenseitenwand vorgesehene Drehsperre in vergrößerter Darstellung.

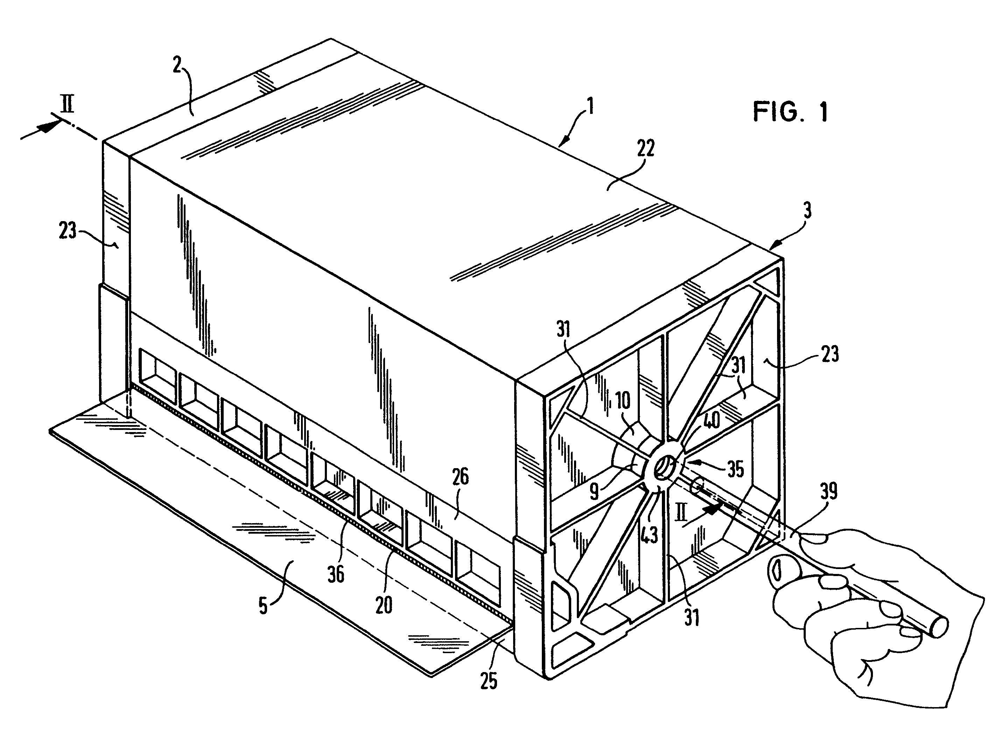

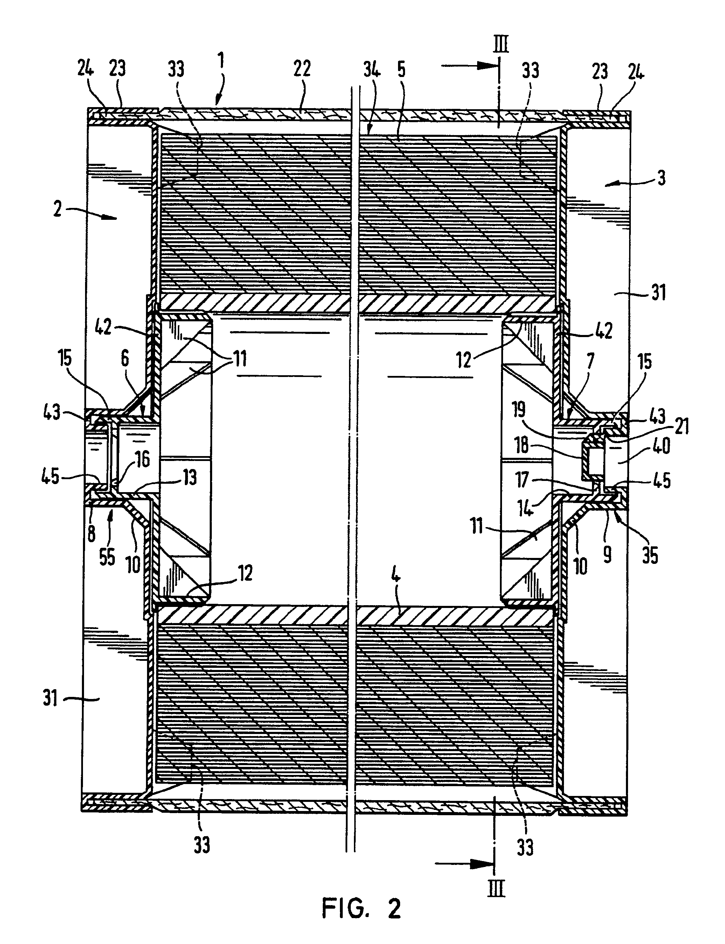

Die in Fig. 1 perspektivisch dargestellte Tageslichtkassette weist ein quaderförmiges Gehäuse 1 auf, das über eine linke Kassettenseitenwand 2 und eine rechte Kassettenseitenwand 3 aus schlagfestem Polystyrol sowie einen sich zwischen den Kassettenseitenwänden 2, 3 erstreckenden Mantel 22 aus Karton verfügt. Im Gehäuse 1 ist ein Schlitz 36 vorgesehen, der zur Lichtabdichtung von zwei Abschlußprofilen 25, 26 begrenzt ist. Die Abschlußprofile 25, 26 sind auf den einander zuweisenden Seiten mit Samtbändern 20 versehen, die den Einfall von Tageslicht in das Gehäuse 1 verhindern und es gestatten, photographisches Material 5 durch den Schlitz 36 aus der Tageslichtkassette herauszuziehen, nachdem durch Eindrücken eines Dornes 39 in eine Öffnung 40 der Kassettenseitenwand 3 eine Drehsperre im Innern der Tageslichtkassette gelöst worden ist, so daß der in den Figuren 2 bis 4 erkennbare Spulenkern 4 mit dem darauf als Rolle 34 aufgewickelten photographischen Material 5 beim Ziehen an dem in Fig. 1 aus dem Schlitz 36 hervorstehenden Abschnitt des photographischen Materials 5 gedreht werden kann.

Die dem Spulenkern 4 zugeordnete Drehsperre kann statt durch Einschlagen eines Dornes 39 in die Öffnung 40 auch durch kräftiges Ziehen am aus dem Schlitz 36 herausragenden Endabschnitt des photographischen Materials 5 entriegelt werden.

Wie man aus den Figuren 1 und 2 erkennt, ist die Materialstärke der Kassettenseitenwände 2, 3 gering, weshalb zur Versteifung mehrere Verstärkungsrippen 31 vorgesehen sind, die sich radial zwischen einem in den Kassettenseitenwänden 2, 3 eingeformten und die Öffnung 40 umgebenden Nabenteil 35 und einem Randbereich 23 erstrecken, in dem der Seitenrand 24 des Mantels 22 eingeklemmt ist.

Die Nabenteile 35 in der linken Kassettenseitenwand 2 und der rechten Kassettenseitenwand 3 dienen zur Aufnahme eines linken Lagerflansches 6 und eines rechten Lagerflansches 7, die jeweils einen kurzen Rohrstutzen 12 großen Durchmessers aufweisen, der jeweils an einer Stirnseite in den Rollenkern 4 hineinragt und drehfest mit diesem, beispielsweise durch Einpressen, befestigt ist. Auf der von dem Rohrstutzen 12 großen Durchmessers wegweisenden Seite der Flanschfläche 42 der Lagerflansche 6, 7 sind Rohrstutzen kleinen Durchmessers oder Buchsenteile 13, 14 angeformt, die in die Nabenteile 35, 55 eingreifen und dort drehbar gelagert sind. Die Lagerflansche 6, 7 bestehen ebenso wie die Kassettenseitenwände 2, 3 aus Kunststoff.

Die in den Kassettenseitenwänden 2, 3 eingeformten Nabenteile 35, 55 bilden auf der Außenseite den in Fig. 1 perspektivisch erkennbaren Vorsprung und auf der Innenseite der Kassettenseitenwände 2, 3 eine Vertiefung mit einem trichterförmigen Abschnitt 10, der in der linken Kassettenseitenwand 2 in einen hohlzylindrischen Abschnitt 8 und in der rechten Kassettenseitenwand 3 in einen hohlzylindrischen Abschnitt 9 übergeht. Der trichterförmige Abschnitt 10 erleichtert das Einschieben der Buchsenteile 13, 14 beim Zusammenbau der Tageslichtkassette, indem diese eine Führung zum Zentrieren bilden.

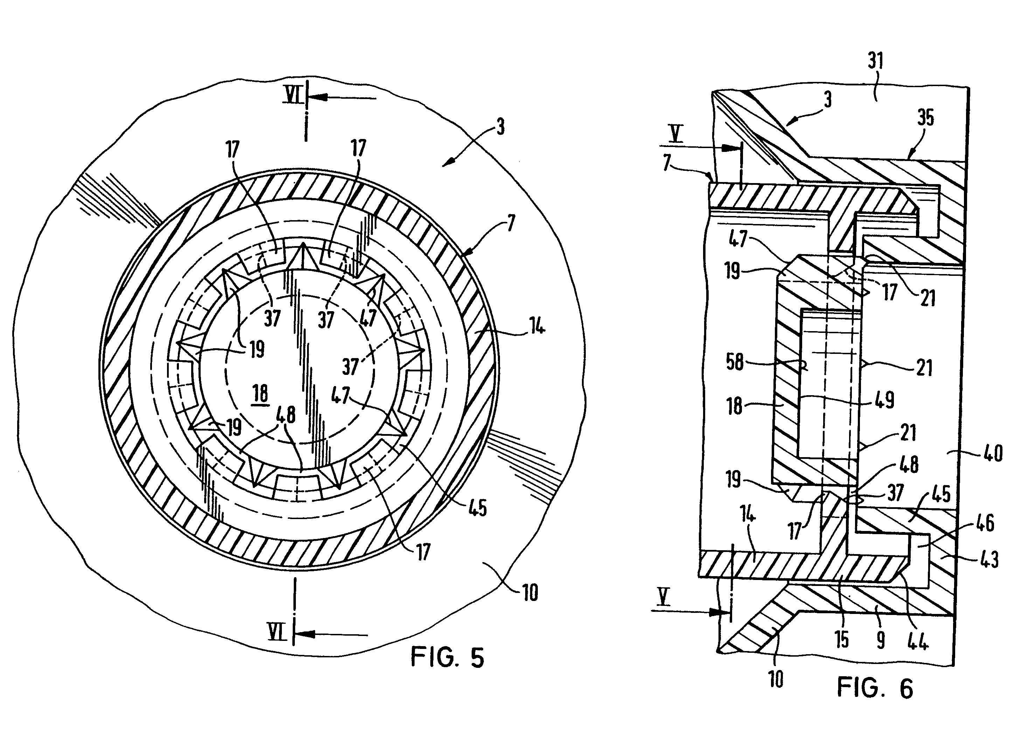

Die hohlzylindrischen Abschnitte 8, 9, deren Innenseiten mit den Außenseiten der Buchsenteile 13, 14 ein Gleitlager bilden, sind durch einen ringförmigen Boden 43 in der insbesondere in den Figuren 2 und 6 erkennbaren Weise abgeschlossen. Wie man anhand Fig. 6 erkennt, enden die Buchsenteile 13, 14 mit ihrem abgeschrägten vorderen Rand 44 in einem kurzen Abstand vor dem ringförmigen Boden 43. Fig. 6 zeigt auch deutlich, wie an den ringförmigen Boden 43 ein sich in Richtung auf den trichterförmigen Abschnitt 10 erstreckender Rohrabschnitt 45 angeformt ist. Zwischen dem Rohrabschnitt 45 und dem hohlzylindrischen Abschnitt 9 bzw. 8 entsteht somit eine Ringnut 46, in die das nach außen weisende vordere Ende 15 des Buchsenteils 14 bzw. 13 hineinragt, ohne jedoch den ringförmigen Boden 43 beim Anliegen der Flanschfläche 42 gegen die Innenseite der Kassettenseitenwand 3 bzw. 2 zu berühren.

Die bisher beschriebene Ausbildung des Nabenteils 35 entspricht dem Aufbau des in Fig. 2 links dargestellten Nabenteils 55. Das in Fig. 2 rechts dargestellte Nabenteil 35 verfügt zusätzlich noch über eine Drehsperre zur Sicherung des Spulenkerns 4 gegen unerwünschtes Verdrehen beim Transport der Tageslichtkassette.

Der an der rechten Kassettenseitenwand 3 vorgesehene Teil der Drehsperre besteht aus einem angeformten Zapfenteil 18, das einen gegenüber dem Rohrabschnitt 45 verkleinerten Durchmesser aufweist und konzentrisch zu diesem angeordnet ist. Das Zapfenteil 18 verfügt entlang seinem Umfang über mehrere im Querschnitt dreieckförmige Zähne 19, von denen in Fig. 6 einer im Längsschnitt und in Fig. 5 alle in einer Draufsicht erkennbar sind. Die axial zum Innern des Gehäuses 1 weisenden Stirnflächen der dreieckförmigen Zähne 19 sind einerseits in der in Fig. 6 erkennbaren Weise abgeschrägt und andererseits in dem abgeschrägten Bereich in axialer Richtung nach innen verjüngt, so daß die nach innen weisenden Stirnflächen der Zähne 19 schräg verlaufende Schneidkanten 47 sind.

An den nach außen weisenden Stirnflächen sind die Zähne 19 über Verbindungsstege 21, die als Sollbruchstellen dienen, mit dem Rohrabschnitt 45 verbunden. Zwischen den Verbindungsstegen 21 verbleiben Durchbrüche 48, deren Breite in etwa der Breite der Zwischenräume zwischen den Zähnen 17 entspricht. Das Zapfenteil 18 mit seinen Zähnen 19 ragt in eine Innenverzahnung aus trapezförmigen Zähnen 17 hinein, die in den Buchsenteilen 14 und 13 identisch ausgebildet sind. In dem der linken Kassettenseitenwand 2 zugeordneten Buchsenteil 13 ist zwar auch eine Innenverzahnung mit trapezförmigen Zähnen 16 vorgesehen, jedoch sind diese dort wegen der fehlenden Gegenverzahnung wirkungslos.

Wie man aus den Figuren 5 und 6 entnehmen kann, erstrecken sich die trapezförmigen Zähne 17 in radialer Richtung in die Zwischenräume zwischen den dreieckförmigen Zähnen 19, so daß das Buchsenteil 14 gegenüber dem Zapfenteil 18 nur geringfügig um das Spiel zwischen den Zähnen 17, 19 verdreht werden kann. Erst wenn durch starkes Ziehen am photographischen Material oder durch Eintreiben eines Dornes 39 die als Sollbruchstellen dienenden Verbindungsstege 21 aufgebrochen sind und das Zapfenteil 18 in das Innere des Buchsenteils 14 gefallen ist, kann das Buchsenteil 14 des Lagerflansches 7 ebenso wie das Buchsenteil 13 des Lagerflansches 6 im Nabenteil 35 leicht gedreht werden. Zum Ausstoßen des Zapfenteils 18 wird der Dorn 39, dessen Außendurchmesser kleiner als der Innendurchmesser des Zapfenteils 18 ist, durch die Öffnung 40 hindurch gegen die Innenseite 58 des scheibenförmigen Bodens 49 des Zapfenteils 18 gedrückt.

Um beim Zusammenbau der Tageslichtkassette das Einführen des Lagerflansches 7 in das das Zapfenteil 18 aufweisende Nabenteil 35 zu erleichtern, verlaufen die beiden seitlichen Flanken der trapezförmigen Zähne 17, die seitlich mit den Zähnen 19 in Berührung kommen können, in der von der Flanschfläche 42 wegweisenden Richtung aufeinander zu und bilden jeweils eine in der Zeichnung nicht erkennbare Zuspitzung in axialer Richtung. Beim Einsetzen des Lagerflansches 7 in die rechte Kassettenseitenwand 3 bewirken die zur Längsachse schräg verlaufenden Flanken der Zähne 17 beim Aufeinandertreffen mit den Zähnen 19 eine geringfügige Rotation, so daß die Zähne 19 in die Zahnlücken zwischen die Zähne 17 gelangen und die Flanschfläche 42 mit der Innenseite der Kassettenseitenwand 3 in Berührung kommen kann. Wenn dies der Fall ist, haben die Zähne 17 in axialer Richtung den in Fig. 6 erkennbaren kleinen Abstand zur Stirnfläche des Rohrabschnitts 45. Da die Zähne 17 gegenüber dem vorderen Rand 44 zurückversetzt angeordnet sind, ragt dieser in die Ringnut 46 hinein. Aufgrund des in Fig. 6 dargestellten Ringspaltes zwischen dem Außenmantel des Buchsenteils 14 und dem Innenmantel des hohlzylindrischen Abschnitts 9 ist die Lagerung mit einem geringfügigen radialen Spiel ausgeführt. Auch in axialer Richtung ist ein geringes Lagerspiel vorgesehen, wobei der axiale Abstand zwischen den Flanschflächen 42 der Lagerflansche 6, 7 geringfügig kleiner als der Abstand der Innenseiten der Kassettenseitenwände 2, 3 ist.

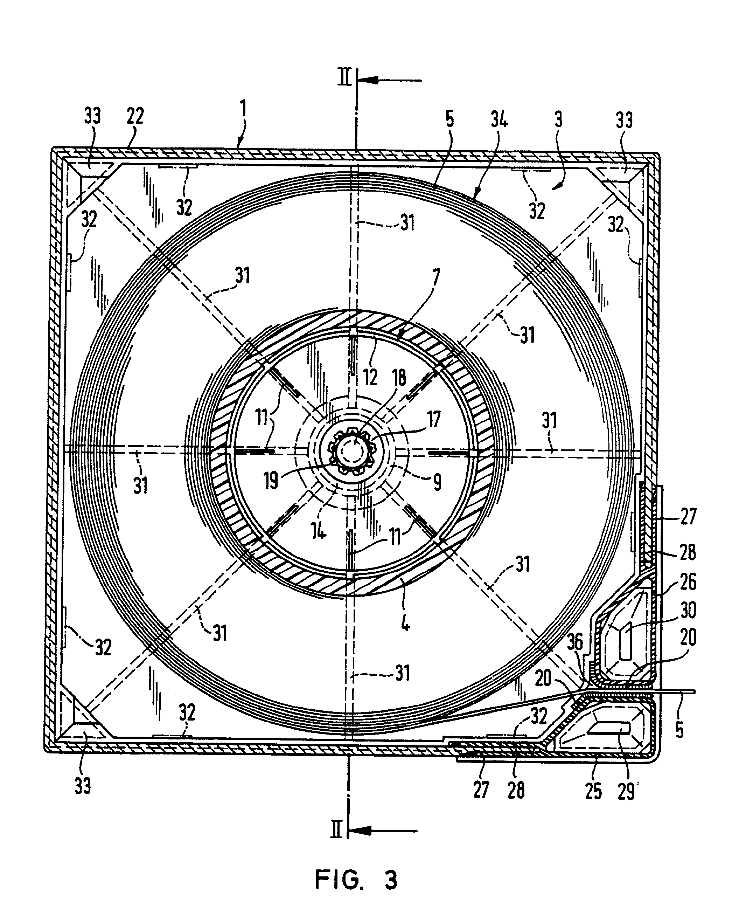

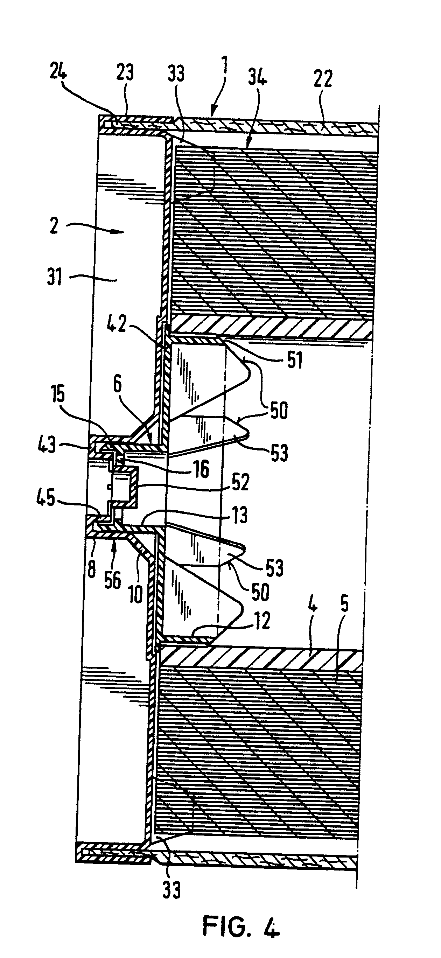

In den Figuren 2 und 3 erkennt man Rippen 11, mit denen die Lagerflansche 6, 7 versteift sind. Bei einem in Fig. 4 dargestellten Ausführungsbeispiel sind die Flächen der Rippen 53 vergrößert und bilden sich vom Rohrstutzen 12 aus erstreckende Führungskanten 50, die das Zusammenfügen der Lagerflansche 6, 7 und des Spulenkerns 4 erleichtern. Man erkennt in Fig. 4 auch detulich eine Abschrägung 51 des nach innen weisenden Randes des Rohrstutzens 12.

In Fig. 4 ist weiterhin eine Abwandlung des in Fig. 2 links dargestellten Nabenteils 55 dargestellt. Abweichend von dem in Fig. 2 dargestellten Ausführungsbeispiel ist an den Rohrabschnitt 45 ein Zapfenteil 52 über mehrere radiale Verbindungsstege angeformt, wobei im Unterschied zu dem Zapfenteil 18 mit Zähnen 19 lediglich die Zähne 19 weggelassen sind. Auf diese Weise unterscheidet sich die linke Kassettenseitenwand 2 von der rechten Kassettenseitenwand nur dadurch, daß die Zähne 19 fehlen. Somit wird bei identischen Lagerflanschen 6 und 7 eine besonders einfache Herstellung der Tageslichtkassette erreicht.

Fig. 3 zeigt die in Fig. 2 im Längsschnitt dargestellte Tageslichtkassette im Querschnitt mit einer Draufsicht auf den Lagerflansch 7 in der in Fig. 2 dargestellten Ausführungsform. Man erkennt die trapezförmigen Zähne 17, die mit den in Fig. 3 nicht dargestellten und den in Fig. 5 vergrößert gezeigten Zähnen 19 in Eingriff stehen.

In Fig. 3 sind links oben die im Zusammenhang mit Fig. 1 bereits erwähnten Abschlußprofile 25, 26 im Schnitt zu erkennen. Die Abschlußprofile 25 und 26 verfügen über Aufnahmen 27, in denen die Längsränder 28 des Mantels 22 eingesteckt sind. Zur Befestigung der Abschlußprofile 25, 26 sind an den Kassettenseitenwänden 2, 3 pyramidenförmige Halterungen 29 und 30 vorgesehen, die in an den stirnseitigen Enden der Abschlußprofile 25, 26 vorgesehenen Vertiefungen eingreifen. Man erkennt in Fig. 3 auch den Verlauf des photographischen Materials 5 zwischen den Samtbändern 20, die den Spalt zwischen den Abschlußprofilen 25, 26 überbrücken. Die in Fig. 1 perspektivisch dargestellten Verstärkungsrippen 31 sind in Fig. 3 gestrichelt dargestellt.

Beim Zusammenbau der Tageslichtkassette werden zuerst im Hellen die beiden Abschlußprofile 25, 26 auf die beiden Längsränder 28 des Kartonzuschnittes für den Mantel 22 gesteckt. Anschließend gelangen diese Teile in eine Dunkelkammer, um die Rolle 34 mit dem photographischen Material 5 und den Lagerflanschen 6, 7 aufzunehmen. Dazu werden die beiden Kassettenseitenwände 2, 3 mit den Seitenrändern 24 des Mantels 22 und den Buchsenteilen 13, 14 der Lagerflansche 6, 7 in Eingriff gebracht. Abschließend werden die Kassettenseitenwände 2, 3 mit dem Mantel 22 an Schweißstellen 32 dauerhaft verbunden. Um den Zusammenbau zu erleichtern, sind zum Zentrieren des Mantels 22 an drei Ecken der Kassettenseitenwände 2, 3 noch Zentrierprofile 33 vorgesehen, die abgeschrägt verlaufende Führungsflächen bilden.

## Ansprüche

1. Tageslichtkassette für photographisches Material (5), das als Rolle (34) auf einen Spulenkern (4) aufgewickelt ist, der zwischen zwei an einander gegenüberliegenden Kassettenseitenwänden (2, 3) ausgebildeten Nabenteilen (35, 55, 56) in einem Gehäuse (1) drehbar gelagert ist, in dessen Mantel (22) ein gegen Licht abgedichteter Schlitz (36) für die Entnahme des photographischen Materials (5) nach dem Brechen der Sollbruchstelle (21) einer Drehsperre zwischen dem Spulenkern (4) und dem Nabenteil (35) vorgesehen ist, **dadurch gekennzeichnet,** daß die Drehsperre aus einem das Nabenteil (35) mit dem Spulenkern (4) verbindenden Zapfenteil (18) und einem zugeordneten Buchsenteil (14) besteht, die in Richtung ihrer Längsachsen gegeneinander leicht verschieblich und in Drehrichtung um ihre Längsachsen drehfest miteinander verbunden sind, wobei das Zapfenteil (18) der Drehsperre über die Sollbruchstelle (21) lösbar und das Buchsenteil (14, 13) der Drehsperre dauerhaft mit den benachbarten Teilen (45, 42) verbunden ist.

2. Tageslichtkassette nach Anspruch 1, **dadurch gekennzeichnet,** daß das Buchsenteil (13, 14) an einem mit dem Spulenkern (4) drehfest verbundenen Lagerflansch (6, 7) und das Zapfenteil (18) an dem Nabenteil (35, 45) angeformt ist.

3. Tageslichtkassette nach Anspruch 1, **dadurch gekennzeichnet,** daß das Buchsenteil (13, 14) eine Innenverzahnung (16, 17) und das Zapfenteil (18) eine Außenverzahnung (19) aufweist.

4. Tageslichtkassette nach Anspruch 1, **dadurch gekennzeichnet,** daß zwei gleichartige Lagerflansche (6, 7) vorgesehen sind, die mit einem Rohrstutzen (12) in die Enden des als Hohlzylinder ausgebildeten Spulenkerns (4) eingedrückt sind, wobei das Buchsenteil (13, 14) einen gegenüber dem Spulenkern (4) kleineren Durchmesser aufweist und auf der von dem Spulenkern (4) wegweisenden Seite der Flanschfläche (42) des Lagerflansches (6, 7) konzentrisch angeformt ist.

5. Tageslichtkassette nach Anspruch 4, **dadurch gekennzeichnet,** daß der Lagerflansch 6, 7 auf der vom Buchsenteil (13, 14) wegweisenden Seite mehrere sich radial erstreckende und in Längsrichtung über den Rohrstutzen (12) hervorstehende Rippen (53) aufweist, die eine vom Rand (51) des Rohrstutzens (12) ausgehende, schräg verlaufende Führungskante (50) aufweisen.

6. Tageslichtkassette nach Anspruch 1, **dadurch gekennzeichnet,** daß die Kassettenseitenwand (2, 3) eine vom Spulenkern (4) wegweisende Vertiefung aufweist, die sich in einem trichterförmigen Abschnitt (10) bis auf einen Durchmesser verkleinert, der geringfügig größer als der Außendurchmesser der Buchsenteile (13, 14) ist, und anschließend an den trichterförmigen Abschnitt (10) in einen angeformten hohlzylindrischen Abschnitt (8, 9) übergeht, der durch einen ringförmigen Boden (43) begrenzt ist, an dem das Zapfenteil (18) über eine Vielzahl von als Sollbruchstelle dienenden, leicht zerstörbaren Verbindungsstegen (21) angeformt ist.

7. Tageslichtkassette nach Anspruch 6, **dadurch gekennzeichnet,** daß das Zapfenteil (18) an einen vom ringförmigen Boden (43) aus in Richtung auf den trichterförmigen Abschnitt (10) der Vertiefung hervorragenden Rohrabschnitt (45) angeformt ist, der gemeinsam mit dem sich an den trichterförmigen Abschnitt (10) anschließenden hohlzylindrischen Abschnitt (10) eine Ringnut (46) zur Lagerung des Buchsenteils (13, 14) bildet.

8. Tageslichtkassette nach Anspruch 1, **dadurch gekennzeichnet,** daß das Zapfenteil (18) eine Außenverzahnung mit Zähnen (19) aufweist, deren vom Spulenkern (4) wegweisende Stirnseiten in Sollbruchverbindungsstege (21) übergehen und deren zum Spulenkern (4) weisende Stirnseiten (47) radial und axial abgeschrägt sind.

9. Tageslichtkassette nach Anspruch 1, **dadurch gekennzeichnet,** daß das Buchsenteil (13, 14) eine Innenverzahnung aufweist, deren Zähne (16, 17) sich in der vom Spulenkern (4) wegweisenden axialen Richtung unter Verbreiterung der Zahnlücken verjüngen.

10. Tageslichtkassette nach Anspruch 1, **dadurch gekennzeichnet,** daß das Zapfenteil (18) eine Außenverzahnung mit im radialen Querschnitt dreieckförmigen Zähnen (19) und das Buchsenteil (13, 14) eine Innenverzahnung mit im radialen Querschnitt trapezförmigen Zähnen (17) aufweist.

## Claims

1. Daylight magazine for photographic material (5) which is wound as a roll (34) onto a spool core (4) rotatably mounted between two hub parts (35, 55, 56) formed on opposite magazine side walls (2, 3), in a housing (1) in the shell (22) of which is provided a slot (36) sealed against light for the removal of the photographic material (5) after the breaking of the predetermined breaking point (21) of a rotation prevention device between the spool core (4) and the hub part (35), characterized in that the rotation prevention device comprises a spigot part (18) connecting the hub part (35) to the spool core (4) and an associated bush part (14), which are connected to one another with slight displaceability relative to one another in the direction of their longitudinal axes and in torsionally rigid fashion in the direction of rotation about their longitudinal axes, the spigot part (18) of the rotation prevention device being releasable via the predetermined breaking point (21) and the bush part (14, 13) of the rotation prevention device being permanently connected to the adjacent parts (45, 42).

2. Daylight magazine according to Claim 1, characterized in that the bush part (13, 14) is integrally formed on a bearing flange (6, 7) connected in torsionally rigid fashion to the spool core (4) and the spigot part (18) is integrally formed on the hub part (35, 45).

3. Daylight magazine according to Claim 1, characterized in that the bush part (13, 14) has an internal toothing (16, 17) and the spigot part (18) has an external toothing (19).

4. Daylight magazine according to Claim 1, characterized in that two identical bearing flanges (6, 7) are provided, which are pressed with a socket piece (12) into the ends of the spool core (4), which is designed as a hollow cylinder, the bush part (13, 14) having a diameter which is smaller than that of the spool core (4) and being integrally and concentrically formed on that side of the flange surface (42) of the bearing flange (6, 7) which faces away from the spool core (4).

5. Daylight magazine according to Claim 4, characterized in that, on the side facing away from the bush part (13, 14), the bearing flange 6, 7 has a plurality of radially extending ribs (53) which protrude in the longitudinal direction beyond the socket piece (12) and have an obliquely extending guiding edge (50) starting from the edge (51) of the socket piece (12).

6. Daylight magazine according to Claim 1, characterized in that the cassette side wall (2, 3) has a recess, which faces away from the spool core (4) and, in a funnel-shaped portion (10), reduces to a diameter which is slightly greater than the outside diameter of the bush parts (13, 14) and, adjoining the funnel-shaped portion (10), merges into an integrally formed hollow cylindrical portion (8, 9) bounded by an annular base (43), on which the spigot part (18) is integrally formed via a multiplicity of easily destroyed connecting webs (21) serving as predetermined breaking point.

7. Daylight magazine according to Claim 6, characterized in that the spigot part (18) is integrally formed on a tube portion (45) which protrudes from the annular base (43) towards the funnel-shaped portion (10) of the recess and, together with the hollow cylindrical portion (8, 9) adjoining the funnel-shaped portion (10), forms an annular groove (46) for mounting the bush part (13, 14).

8. Daylight magazine according to Claim 1, characterized in that the spigot part (18) has an external toothing with teeth (19) whose front faces facing away from the spool core (4) merge into predetermined-break connecting webs (21) and whose front faces (47) facing towards the spool core (4) are radially and axially chamfered.

9. Daylight magazine according to Claim 1, characterized in that the bush part (13, 14) has an internal toothing whose teeth (16, 17) taper in the axial direction away from the spool core (4), with enlargement of the tooth spaces.

10. Daylight magazine according to Claim 1, characterized in that the spigot part (18) has an external toothing with teeth (19) which are triangular in radial cross-section and the bush part (13, 14) has an internal toothing with teeth (17) which are trapezoidal in radial cross-section.

## Revendications

1. Chargeur à lumière du jour pour un produit photographique (5) qui est enroulé en bobine (34) sur un noyau de bobine (4) supporté en rotation dans un boîtier (1) entre deux éléments de moyeu (35, 55, 56) formés dans des parois latérales (2, 3) opposées du chargeur, boîtier dont la surface latérale (22) présente une fente (36) protégée contre la lumière pour l'enlèvement du produit photographique (5) après le bris de la zone de rupture (21) d'un arrêt de rotation entre le noyau de bobine (4) et l'élément de moyeu (35), caractérisé en ce que l'arrêt de rotation se compose d'un élément de tourillon (18) reliant l'élément de moyeu (35) au noyau de bobine (4) et d'un élément de douille associé (14), qui sont assemblés l'un à l'autre de façon à pouvoir légèrement coulisser dans la direction de leur axe longitudinal mais sont empêchés de tourner l'un par rapport à l'autre autour de leurs axes longitudinaux, l'élément de tourillon (18) de l'arrêt de rotation étant attaché aux pièces voisines (45, 42) de façon libérable par la zone de rupture (21) tandis que l'élément de douille (14, 13) de l'arrêt de rotation est durablement fixé à ces pièces (45, 42).

2. Chargeur à lumière du jour suivant la revendication 1, caractérisé en ce que l'élément de douille (13, 14) est formé dans un flasque de palier (6, 7) calé sur le noyau de bobine (4) et que l'élément de tourillon (18) est formé dans l'élément de moyeu (35, 45).

3. Chargeur à lumière du jour suivant la revendication 1, caractérisé en ce que l'élément de douille (13, 14) présente une denture intérieure (16, 17) et l'élément de tourillon (18) une denture extérieure (19).

4. Chargeur à lumière du jour suivant la revendication 1, caractérisé en ce qu'il est prévu deux flasques de palier analogues (6, 7), qui sont introduits par pression avec un collet tubulaire (12) dans les extrémités du noyau de bobine (4) en forme de cylindre creux, l'élément de douille (13, 14) présentant un diamètre plus petit que celui du noyau de bobine (4) et étant formé concentriquement sur le côté de la face (42) du flasque de palier (6, 7) qui est à l'opposé du noyau de bobine (4).

5. Chargeur à lumière du jour suivant la revendication 4, caractérisé en ce que le flasque de palier (6, 7) présente, sur sa face située à l'opposé de l'élément du douille (13, 14), plusieurs ailettes (53) radiales et dépassant en direction longitudinale le collet tubulaire (12), qui présentent une arête de guidage (50) oblique à partir du bord (51) du collet tubulaire (12).

6. Chargeur à lumière du jour suivant la revendication 1, caractérisé en ce que la paroi latérale (2, 3) du chargeur présente un défoncement situé à l'opposé du noyau de bobine (4), qui dans un tronçon tronconique (10) diminue jusqu'à un diamètre qui est légèrement plus grand que le diamètre extérieur des éléments de douille (13, 14), et se raccordant à ce tronçon tronconique (10) se transforme en un tronçon cylindrique creux (8, 9) qui est délimité par un fond annulaire (43), dans lequel est formé l'élément de tourillon (18) maintenu par une pluralité de pattes de liaison (21) aisément frangibles servant de zone de rupture.

7. Chargeur à lumière du jour suivant la revendication 6, caractérisé en ce que l'élément de tourillon (18) est formé dans un tronçon tubulaire (45) saillant dans le fond annulaire (43) en direction du tronçon tronconique (10) du défoncement, qui forme avec le tronçon cylindrique creux (8, 9) se raccordant au tronçon tronconique (10) une gorge annulaire (46) destinée à recevoir l'élément de douille (13, 14).

8. Chargeur à lumière du jour suivant la revendication 1, caractérisé en ce que l'élément de tourillon (18) présente une denture extérieure avec des dents (19), dont les faces situées à l'opposé du noyau de bobine (4) se transforment en pattes de liaison à rompre (21) et dont les faces (47) tournées vers le noyau de bobine (4) sont inclinées radialement et axialement.

9. Chargeur à lumière du jour suivant la revendication 1, caractérisé en ce que l'élément de douille (13, 14) présente une denture intérieure dont les dents (16, 17) se rétrécissent dans la direction axiale opposée au noyau de bobine (4), avec un élargissement de l'espace entre les dents.

10. Chargeur à lumière du jour suivant la revendication 1, caractérisé en ce que l'élément de tourillon (18) présente une denture extérieure avec des dents (19) de section radiale triangulaire et l'élément de douille (13, 14) présente une denture intérieure avec des dents (17) de section radiale trapézoïdale.

FIG. 1

EP 0 270 486 B1

FIG. 2

FIG. 3

FIG. 4

FIG. 5

FIG. 6

EP 0 270 486 B1